# DEMANDE DE BREVET EUROPEEN

(11) **EP 4 799 782 A1**
(43) Date de publication de la demande: **02.09.2026**
(21) Numéro de dépôt: 25227700.9
(22) Date de dépôt: 30.12.2025
(51) Int. Cl.: B29B 11/14, B29C 49/00, B29C 49/06, B29C 49/12, B29C 49/64

(54) **PREFORME POUR RECIPIENT EN MATIERE PLASTIQUE**

(30) Priorité: 26.02.2025 FR 2501976; 30.06.2025 FR 2507272
(71) Demandeur: Sidel Participations, 76930 Octeville-sur-Mer (FR)
(72) Inventeur: LETESTU, Mickael, 76930 OCTEVILLE-SUR-MER (FR); BOUKOBZA, Michel, 76930 OCTEVILLE-SUR-MER (FR); DERRIEN, Mikael, 76930 OCTEVILLE-SUR-MER (FR)
(74) Mandataire: Sidel Group

(57) **Abrégé**

La présente invention concerne une préforme (1) pour la fabrication de récipients par étirage-soufflage, en matière plastique, comprenant au moins un corps (2) symétrique de révolution autour d'un axe (X) central vertical, ledit corps (2) comportant une paroi extérieure (2a) et une paroi intérieure (2b), la distance radiale entre la paroi extérieure (2a) et la paroi intérieure (2b) définissant une épaisseur de paroi, un col (3) ouvert qui s'étend dans le prolongement du corps (2) à partir d'une extrémité supérieure de celui-ci, ledit col (3) étant séparé du corps (2) par une collerette annulaire (4), et un fond (5) qui ferme le corps (2) à partir d'une extrémité inférieure (6) de ce dernier, ledit fond (5) étant symétrique de révolution autour de l'axe (X) central ; ladite préforme est remarquable en ce que ledit corps (2) présente une forme sensiblement cylindrique dont l'épaisseur de la paroi est croissante depuis la collerette (4), l'épaisseur de la paroi du corps (2) sous la collerette étant égale à E2, en direction du fond (5) sur une hauteur dite de variation Hv qui est strictement inférieure à la hauteur H entre la collerette (4) et l'extrémité inférieure (6) du corps (2) et est strictement supérieure à 0,35H, ladite hauteur de variation Hv étant la moyenne de la hauteur de variation Hv₁ de la paroi extérieure (2a) et de la hauteur de variation Hv₂ de la paroi intérieure (2b), de sorte que ladite épaisseur E2 soit croissante sur la hauteur Hv et que l'épaisseur de la paroi du corps (2) entre la hauteur Hv et l'extrémité inférieure (6) du corps soit sensiblement constante et égale à E1, dans laquelle E1 correspond à l'épaisseur de la paroi du corps (2) à partir de la hauteur Hv₁ ou Hv₂ la plus grande.

## Description

### Domaine technique

La présente invention a trait à la fabrication des récipients à partir de préformes en matière plastique, notamment en polytéréphtalate d'éthylène (PET) et ou en polytéréphtalate d'éthylène recyclé (rPET). Plus précisément, l'invention concerne une préforme destinée au formage d'un récipient par soufflage ou étirage soufflage, au sein d'un moule à l'empreinte du récipient ou de manière libre (c'est-à-dire en l'absence de moule).

### Etat de la technique

Il est bien connu qu'un récipient comprend ordinairement une paroi latérale généralement symétrique de révolution qui s'étend suivant un axe central, un col qui s'étend dans le prolongement de la paroi latérale et par lequel le récipient est destiné à être rempli et vidé, et un fond qui s'étend transversalement à partir d'une extrémité inférieure du corps et par lequel le récipient est destiné à reposer sur une surface plane.

Par ailleurs, une préforme comprend ordinairement un corps de forme sensiblement cylindrique (destiné à former la paroi latérale du récipient), un col ouvert qui s'étend dans le prolongement du corps à partir d'une extrémité supérieure de celui-ci, et dont il est séparé par une collerette (le col demeure inchangé au cours du processus de formage du récipient), ainsi qu'un fond qui ferme le corps à une extrémité inférieure de celui-ci (et destiné à former le fond du récipient).

Pour former le récipient à partir de la préforme, on commence par chauffer le corps et le fond de la préforme à une température supérieure à la température de transition vitreuse de la matière (qui, pour le PET, est de l'ordre 72 à 75°C). On injecte ensuite un fluide (typiquement de l'air) sous pression dans la préforme, dont le corps subit une inflation à la fois axiale et radiale jusqu'à parvenir à la forme souhaitée pour le corps du récipient. Généralement, l'expansion axiale est facilitée par un étirage à l'aide d'une tige dite d'étirage.

Ladite chauffe est généralement conduite dans une unité de chauffe (également appelée four) équipée d'une pluralité de sources de rayonnement infrarouge auxquelles sont exposées les préformes. Ces sources sont en général des lampes halogènes, qui rayonnent sur un spectre assez large incluant l'infrarouge court (et éventuellement une partie de l'infrarouge moyen) ainsi qu'une partie au moins du spectre visible. Les lampes halogènes ont comme principaux défauts une directivité faible (voire inexistante) et une durée de vie relativement courte.

Afin de pallier ces inconvénients, la demanderesse a développé une technologie de chauffe alternative basée sur l'utilisation de sources de rayonnement monochromatique (ou quasi-monochromatique), qui offrent une meilleure directivité et une plus grande longévité, cf. par ex. la demande de brevet européen EP 2 720 842 (Sidel Participations), qui décrit un procédé de chauffe de préformes au moyen d'une matrice de diodes laser de type à cavité verticale émettant par la surface (VCSEL).

De nombreux tests de cette nouvelle technologie dite four laser, conduits sur des préformes de toutes formes et de toutes dimensions, ont montré que la chauffe des préformes pouvait encore être améliorée en développant des formes des préformes différentes de celles connues et utilisées dans la technologie du four halogène. Ainsi, il est apparu qu'il convenait de retravailler la silhouette et le dimensionnement des préformes.

A cet égard, la demanderesse a déjà proposé une préforme qui, lorsqu'exposée à un rayonnement infrarouge monochromatique ou quasi-monochromatique, peut être chauffée de manière relativement homogène, c'est-à-dire sans présenter de zones de surchauffe locale non désirée. Une telle préforme adaptée à un four laser est décrit notamment dans le document WO2017/103372A1 déposé par la demanderesse.

Ledit document WO2017/103372A1 décrit une préforme de récipient en matière plastique, qui comprend un corps symétrique de révolution autour d'un axe central ; un col ouvert qui s'étend dans le prolongement du corps dont il est séparé par une collerette en saillie radiale ; un fond qui ferme le corps à l'opposé du col ; dans laquelle le corps présente une portion concave en section axiale et dans laquelle : B≤ 0.9 A et 0.5 C < C' < 0.95 C où A est le diamètre hors tout du corps, mesuré sous la collerette ; B est le diamètre externe du fond, mesuré à sa jonction avec le corps ; C est la hauteur cumulée du corps et du fond, mesurée à partir de la collerette ; C' est la hauteur, mesurée axialement, de la portion concave du corps, et la portion concave présente, en section axiale, sur une face externe, un rayon RE de courbure externe tel que 1.5 C ≤ RE ≤ 10 C.

Ces caractéristiques contribuent à minimiser la réfraction dans la matière, au bénéfice d'une meilleure qualité de chauffe.

Toutefois, ces préformes ne sont pas optimisées pour toutes les tailles de formats d'emballages et tous les types de cols afin de permettre une adéquation idéale avec l'emballage, notamment dans le cas d'allègements importants, tout en étant adaptées aux règles et contraintes d'injection des préformes. Ainsi, ces préformes ne permettent pas de procurer une distribution de la matière satisfaisante pour tous les formats de récipients, de permettre in fine un allègement des récipients fabriqués à partir de ces préformes tout en procurant une bonne qualité desdits récipients notamment.

### Divulgation de l'invention

L'un des buts de l'invention est donc de remédier à tout ou partie de ces inconvénients en proposant une préforme de conception simple et peu onéreuse particulièrement adaptée à un chauffage par un four laser et procurant une meilleure distribution de la matière pour tous les formats de récipients, permettant un allègement des récipients fabriqués à partir de cette préforme tout en procurant une bonne qualité desdits récipients notamment.

A cet effet, et conformément à l'invention, il est proposé une préforme pour la fabrication de récipients par étirage-soufflage, en matière plastique, comprenant au moins un corps symétrique de révolution autour d'un axe central vertical, ledit corps comportant une paroi externe et une paroi interne, la distance radiale entre la paroi externe et la paroi interne définissant une épaisseur de paroi, un col ouvert qui s'étend dans le prolongement du corps à partir d'une extrémité supérieure de celui-ci, ledit col étant séparé du corps par une collerette annulaire, et un fond qui ferme le corps à partir d'une extrémité inférieure de ce dernier, ledit fond étant symétrique de révolution autour de l'axe central, remarquable en ce que ledit corps présente une forme sensiblement cylindrique dont l'épaisseur de la paroi est croissante depuis la collerette, l'épaisseur de la paroi du corps sous la collerette étant égale à E2, en direction du fond sur une hauteur dite de variation Hv qui est strictement inférieure à la hauteur H entre la collerette et l'extrémité inférieure du corps et est strictement supérieur à 0,35H, ladite hauteur de variation Hv étant la moyenne de la hauteur de variation Hv₁ de la paroi extérieure et de la hauteur de variation Hv₂ de la paroi intérieure, de sorte que ladite épaisseur E2 soit croissante sur la hauteur Hv et que l'épaisseur de la paroi du corps entre la hauteur Hv et l'extrémité inférieure du corps soit sensiblement constante et égale à E1, dans laquelle E1 correspond à l'épaisseur de la paroi du corps à partir de la hauteur Hv₁ ou Hv₂ la plus grande.

De préférence, la variation V de l'épaisseur du corps sur la hauteur Hv, qui est égale à E1-E2 est comprise entre 0.25 E1 et 0.75 E1.

Par ailleurs, de manière avantageuse, le taux de variation T de l'épaisseur du corps qui est égal à la hauteur de variation Hv divisé par la variation V (T=Hv/V) est compris entre 10 et 40.

De préférence, ledit taux de variation T de l'épaisseur du corps est compris entre 20 et 25.

De plus, sur la hauteur de variation Hv, le diamètre externe moyen D1 du corps est croissant depuis la collerette en direction de l'extrémité inférieure du corps.

Par ailleurs, sur la hauteur Hv, le diamètre interne moyen D2 du corps est constant depuis la collerette en direction de l'extrémité inférieure du corps.

Selon une variante d'exécution de la préforme suivant l'invention, sur la hauteur de variation Hv, le diamètre externe moyen D1 du corps est constant depuis la collerette en direction de l'extrémité inférieure du corps.

Par ailleurs, sur la hauteur Hv, le diamètre interne moyen D2 du corps est décroissant depuis la collerette en direction de l'extrémité inférieure du corps.

Selon une autre variante d'exécution de la préforme suivant l'invention, sur la hauteur Hv, le diamètre externe moyen D1 du corps est décroissant depuis la collerette en direction de l'extrémité inférieure du corps et le diamètre externe moyen D2 du corps est décroissant depuis la collerette en direction de l'extrémité inférieure du corps, ledit diamètre externe moyen D2 décroissant plus rapidement que le diamètre interne moyen D1.

Accessoirement, le fond de la préforme présente une forme sensiblement hémisphérique.

Par ailleurs, ledit fond présente, de préférence, une épaisseur de paroi inférieure ou égale à l'épaisseur E1 du corps de la préforme.

Un autre objet de l'invention concerne un procédé de fabrication d'un récipient par soufflage ou par étirage-soufflage comprenant au moins les étapes suivantes de fourniture d'une préforme selon l'invention ; chauffe du corps de la préforme par exposition à un rayonnement infrarouge monochromatique ou quasi-monochromatique d'intensité prédéterminée ; et formage du récipient par injection d'un fluide sous pression dans la préforme ainsi préalablement chauffée.

Par ailleurs, entre l'étape de chauffe et l'étape de formage, une étape d'introduction de la préforme dans un moule à l'empreinte du récipient.

Un dernier objet de l'invention concerne un moule pour le formage d'une préforme selon l'invention comprenant un corps de moule ayant une paroi latérale à l'empreinte d'une face externe du corps de la préforme et un fond de moule à l'empreinte d'une face externe du fond de la préforme et un noyau à l'empreinte d'une face interne de la préforme.

### Brève description des dessins

D'autres avantages et caractéristiques ressortiront mieux de la description qui va suivre de plusieurs variantes d'exécution, données à titre d'exemples non limitatifs, de la préforme conforme à l'invention, en référence aux dessins annexés sur lesquels :
[Fig. 1] est une vue en coupe en élévation d'une préforme suivant l'invention pour la fabrication d'un récipient,
[Fig. 2] est une vue en coupe en élévation d'une variante d'exécution d'une préforme suivant l'invention pour la fabrication d'un récipient,
[Fig. 3] est une représentation schématique illustrant la fabrication d'un récipient à partir d'une préforme suivant l'invention,
[Fig. 4] est une vue en coupe d'un moule permettant de former la préforme suivant l'invention.

### Mode de réalisation de l'invention

Dans la suite de la description, les mêmes références numériques désignent les mêmes éléments. Par ailleurs, les différentes vues ne sont pas nécessairement tracées à l'échelle

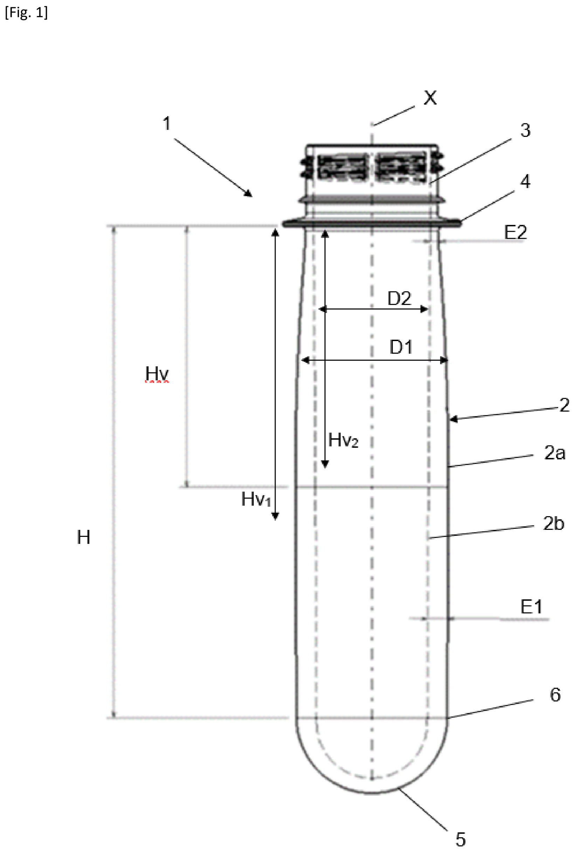

Sur la figure 1 est représentée une préforme 1 en matière plastique tel que PET (polytéréphtalate d'éthylène) et/ou du rPET (polytéréphtalate d'éthylène recyclé), à partir de laquelle un récipient est destiné à être formé par soufflage ou étirage soufflage.

Chaque préforme 1 comprend, en premier lieu, un corps 2 qui s'étend de manière symétrique de révolution autour d'un axe X central. Selon un mode avantageux convenant à la plupart des applications, le corps 2 est sensiblement cylindrique. Le corps 2 de la préforme 1 est destiné à former un corps et une épaule du récipient, non représenté sur les figures.

Chaque préforme 1 comprend, en deuxième lieu, un col 3 ouvert qui s'étend dans le prolongement du corps 2 à partir d'une extrémité supérieure de celui-ci. Le col 3 présente sa forme finale, qu'il est destiné à conserver tout au long du formage et de la vie du récipient.

Le col 3 est avantageusement séparé du corps 2 par une collerette 4 en saillie radiale, par laquelle la préforme 1 (puis le récipient) est suspendue (ou plus généralement tenue) pendant diverses opérations de convoyage, de chauffe de la préforme 1 ou de formage du récipient, puis, respectivement, de remplissage, bouchage et étiquetage de ce dernier.

Chaque préforme 1 comprend, en troisième lieu, un fond 5 qui ferme le corps 2 à partir d'une extrémité 6 inférieure de celui-ci, c'est-à-dire que la matière du fond 5 s'étend à partir de l'extrémité 6 inférieure du corps 2 (sensiblement cylindrique) pour venir rejoindre radialement l'axe X central et fermer ainsi la préforme 1 à l'opposé du col 3. Le fond 5 est symétrique de révolution autour de l'axe X central, c'est-à-dire qu'il est invariant dans tout plan de coupe longitudinale (autrement dit passant par l'axe X central).

Ainsi, ladite préforme 1 suivant l'invention pour la fabrication de récipients par étirage-soufflage, en matière plastique, comprend au moins un corps 2 symétrique de révolution autour d'un axe (X) central vertical, ledit corps 2 comportant une paroi extérieure 2a et une paroi intérieure 2b, la distance radiale entre la paroi extérieure 2a et la paroi intérieure 2b définissant une épaisseur de paroi, un col 3 ouvert qui s'étend dans le prolongement du corps 2 à partir d'une extrémité supérieure de celui-ci, ledit col 3 étant séparé du corps par une collerette 4 annulaire, et un fond 5 qui ferme le corps 2 à partir d'une extrémité inférieure 6 de ce dernier, ledit fond 5 étant symétrique de révolution autour de l'axe (X) central.

Ledit corps 2 présente une forme sensiblement cylindrique dont l'épaisseur de la paroi est croissante depuis la collerette 4, l'épaisseur de la paroi du corps sous la collerette étant égale à E2, en direction du fond 5 sur une hauteur dite de variation Hv qui est strictement inférieure à la hauteur H entre la collerette 4 et l'extrémité inférieure 6 du corps et est strictement supérieur à 0,35H, ladite hauteur de variation Hv étant la moyenne de la hauteur de variation Hv₁ de la paroi extérieure 2a et de la hauteur de la variation Hv₂ de la paroi intérieure 2b, de sorte que ladite épaisseur E2 est croissante sur la hauteur Hv et que l'épaisseur de la paroi 2 du corps 2 entre la hauteur Hv et l'extrémité inférieure du corps 2 soit sensiblement constante et égale à E1, dans laquelle l'épaisseur E1 correspond à l'épaisseur de la paroi du corps 2 au niveau de la hauteur Hv₁ ou Hv₂ la plus grande.

Par ailleurs, de préférence, la hauteur de variation Hv1 de la paroi extérieure 2a du corps 2 et la hauteur de variation Hv2 de la paroi intérieure 2b du corps 2 est comprise entre 0,7Hv et 1,3Hv.

De plus, la variation V de l'épaisseur du corps 2 sur la hauteur Hv, qui est égale à E1-E2 est, de préférence, comprise entre 0.25 E1 et 0.75 E1.

Par ailleurs, de manière avantageuse, le taux de variation T de l'épaisseur du corps 2 qui est égal à la hauteur de variation Hv divisée par la variation V (T=Hv/V) est compris entre 10 et 40 et, de préférence, ledit taux de variation T de l'épaisseur du corps 2 est compris entre 20 et 25.

De plus, sur la hauteur de variation Hv, le diamètre externe moyen D1 du corps 2 est croissant depuis la collerette 4 en direction de l'extrémité inférieure 6 dudit corps 2.

Par ailleurs, sur la hauteur Hv, le diamètre externe moyen D2 du corps 2 est constant depuis la collerette 4 en direction de l'extrémité inférieure 6 dudit corps 2.

Accessoirement, le fond 5 de la préforme 1 présente une forme sensiblement hémisphérique, ledit fond présentant, de préférence, une épaisseur de paroi inférieure ou égale à l'épaisseur E1 du corps 2 de la préforme 1.

Il va de soi que le fond 5 de la préforme 1 pourra présenter une forme quelconque, ainsi qu'une épaisseur quelconque, sans pour autant sortir du cadre de l'invention.

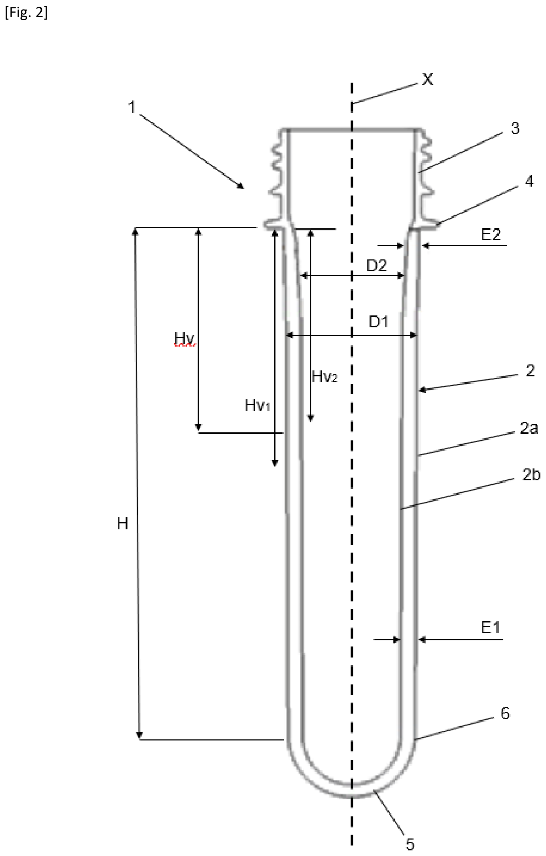

Selon une variante d'exécution, en référence à la figure 2, la préforme 1 comprend, de la même manière que précédemment, un corps 2 qui s'étend de manière symétrique de révolution autour d'un axe X central. Selon un mode avantageux convenant à la plupart des applications, le corps 2 est sensiblement cylindrique. Le corps 2 de la préforme 1 est destiné à former un corps et une épaule du récipient.

Chaque préforme 1 comprend également un col 3 ouvert qui s'étend dans le prolongement du corps 2 à partir d'une extrémité supérieure de celui-ci.

Le col 3 est avantageusement séparé du corps 2 par une collerette 4 en saillie radiale, par laquelle la préforme 1 (puis le récipient) est suspendue (ou plus généralement tenue) pendant diverses opérations de convoyage, de chauffe de la préforme 1 ou de formage du récipient, ainsi que, respectivement, de remplissage, bouchage et étiquetage de ce dernier, l'étiquetage pouvant être effectué avant le remplissage.

Chaque préforme 1 comprend également un fond 5 qui ferme le corps 2 à partir d'une extrémité 6 inférieure de celui-ci, c'est-à-dire que la matière du fond 5 s'étend à partir de l'extrémité 6 inférieure du corps 2 (sensiblement cylindrique) pour venir rejoindre radialement l'axe X central et fermer ainsi la préforme 1 à l'opposé du col 3. Le fond 5 est symétrique de révolution autour de l'axe X central, c'est-à-dire qu'il est invariant dans tout plan de coupe longitudinale (autrement dit passant par l'axe X central.

Ainsi, ladite préforme 1 suivant l'invention pour la fabrication de récipients par étirage-soufflage, en matière plastique, comprend au moins un corps 2 symétrique de révolution autour d'un axe (X) central vertical, ledit corps 2 comportant une paroi extérieure 2a et une paroi intérieure 2b, la distance radiale entre la paroi extérieure 2a et la paroi intérieure 2b définissant une épaisseur de paroi, un col 3 ouvert qui s'étend dans le prolongement du corps 2 à partir d'une extrémité supérieure de celui-ci, ledit col 3 étant séparé du corps 2 par une collerette annulaire 4, et un fond 5 qui ferme le corps 2 à partir d'une extrémité inférieure 6 de ce dernier, ledit fond 5 étant symétrique de révolution autour de l'axe (X) central.

Ledit corps 2 présente une forme sensiblement cylindrique dont l'épaisseur de la paroi est croissante depuis la collerette 4, l'épaisseur de la paroi du corps sous la collerette 4 étant égale à E2, en direction du fond 5 sur une hauteur dite de variation Hv qui est strictement inférieure à la hauteur H entre la collerette 4 et l'extrémité inférieure 6 du corps 2 et est strictement supérieur à 0,35H, ladite hauteur de variation Hv étant la moyenne de la hauteur de variation Hv₁ de la paroi extérieure 2a et de la hauteur de la variation Hv₂ de la paroi intérieure 2b, de sorte que ladite épaisseur E2 est croissante sur la hauteur Hv et que l'épaisseur de la paroi du corps 2 entre la hauteur Hv et l'extrémité inférieure du corps soit sensiblement constante et égale à E1, dans laquelle l'épaisseur E1 correspond à l'épaisseur de la paroi du corps 2 au niveau de la hauteur Hv₁ ou Hv₂ la plus grande.

Par ailleurs, de préférence, la hauteur de variation Hv1 de la paroi extérieure 2a du corps 2 et la hauteur de variation Hv2 de la paroi intérieure 2b du corps 2 est comprise entre 0,7Hv et 1,3Hv.

De plus, la variation V de l'épaisseur du corps 2 sur la hauteur Hv, qui est égale à E1-E2 est, de préférence, comprise entre 0.25 E1 et 0.75 E1.

Par ailleurs, de manière avantageuse, le taux de variation T de l'épaisseur du corps qui est égal à la hauteur de variation Hv divisé par la variation V (T=Hv/V) est compris entre 10 et 40 et, de préférence, ledit taux de variation T de l'épaisseur du corps est compris entre 20 et 25.

Cette variante d'exécution de la préforme se distingue de celle précédemment décrite par le fait que, sur la hauteur de variation Hv, le diamètre externe moyen D1 du corps 2 est constant depuis la collerette 4 en direction de l'extrémité inférieure 6 du corps 2.

Par ailleurs, sur la hauteur Hv, le diamètre externe moyen D2 du corps 2 est décroissant depuis la collerette 4 en direction de l'extrémité inférieure 6 du corps 2.

De la même manière que précédemment, le fond 5 de la préforme présente également une forme sensiblement hémisphérique, ledit fond 5 présentant, de préférence, une épaisseur de paroi inférieure ou égale à l'épaisseur E1 du corps de la préforme.

Il va de soi que le fond 5 de la préforme 1 pourra présenter une forme quelconque, ainsi qu'une épaisseur quelconque, sans pour autant sortir du cadre de l'invention.

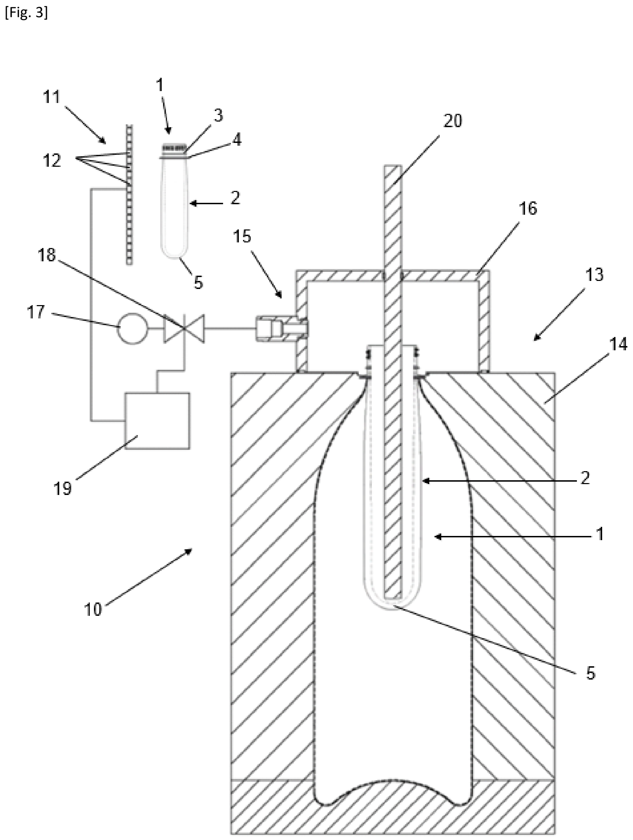

Par ailleurs, on a très schématiquement représenté sur la figure 3 une installation 10 pour la fabrication d'un récipient à partir d'une préforme 1 telle que décrite précédemment.

Cette installation 10 comprend une unité 11 de chauffe pourvue d'une pluralité de sources 12 de rayonnement électromagnétique monochromatique ou quasi-monochromatique dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale.

Les sources 12 sont de préférence organisées en matrice ; il s'agit par exemple de diodes laser de type VCSEL, émettant chacune un rayonnement d'une puissance de quelques dizaines de milliwatts à une longueur d'onde de l'ordre de 1 µm.

L'installation 10 comprend également une unité 13 de formage incluant au moins un moule 14 à l'empreinte du récipient. En pratique, l'unité 13 de formage peut comprendre une série de moules 14 montés sur un carrousel tournant. L'unité de formage 13 comprend, pour chaque moule 14, un dispositif 15 d'injection comprenant une tuyère 16 apte à être appliquée de manière étanche contre une face supérieure du moule 14 et reliée à une source 17 de fluide sous pression (par ex. de l'air) via un distributeur 18 (par ex. une électrovanne). L'installation comprend en outre une unité 19 de contrôle reliée aux sources 17 et au distributeur 18 pour en commander respectivement le réglage de pression, leur ouverture et leur fermeture.

Dans l'exemple illustré, l'unité 13 de formage comprend en outre, pour chaque moule 14, une tige 20 montée coulissante par rapport au moule 14 pour assurer, en même temps que le soufflage, un étirage de la préforme 1.

Ainsi, pour former un récipient, on procède comme suit.

On commence par fournir une préforme 1 telle que décrite précédemment, à partir d'un conteneur par exemple, dans lequel sont stockées des préformes 1 toutes identiques.

Le corps 2 et le fond 5 de la préforme 1 sont alors chauffés au sein de l'unité 11 de chauffe par exposition à un rayonnement infrarouge monochromatique ou quasi-monochromatique d'intensité prédéterminée émis par les sources 12. Pendant la chauffe, la préforme 1 est mise en rotation autour de son axe X afin d'assurer une exposition homogène ou non de son corps 2 et de son fond 5 au rayonnement.

Compte tenu de sa forme et de son dimensionnement, tels que décrit ci-dessus, on observe que la préforme 1 réfracte peu le rayonnement qu'elle reçoit. Il en résulte une meilleure distribution énergétique dans la matière, un meilleur contrôle de la chauffe, et une meilleure correspondance entre le profil de puissance réglé au niveau des sources 12, et le profil thermique constaté (par ex. au moyen d'une caméra thermique) sur la préforme 1.

Puis la préforme 1 ainsi chauffée est introduite dans le moule 14 et le récipient est formé par injection dans la préforme 1 d'un fluide sous pression (par ex. de l'air) en provenance de la source 17.

Le formage par injection peut comprendre une étape d'étirage axial de la préforme 1 à l'aide d'une tige (cf. la tige 20 sur la figure 3).

En variante, le formage pourrait être conduit librement, c'est-à-dire sans moule 14.

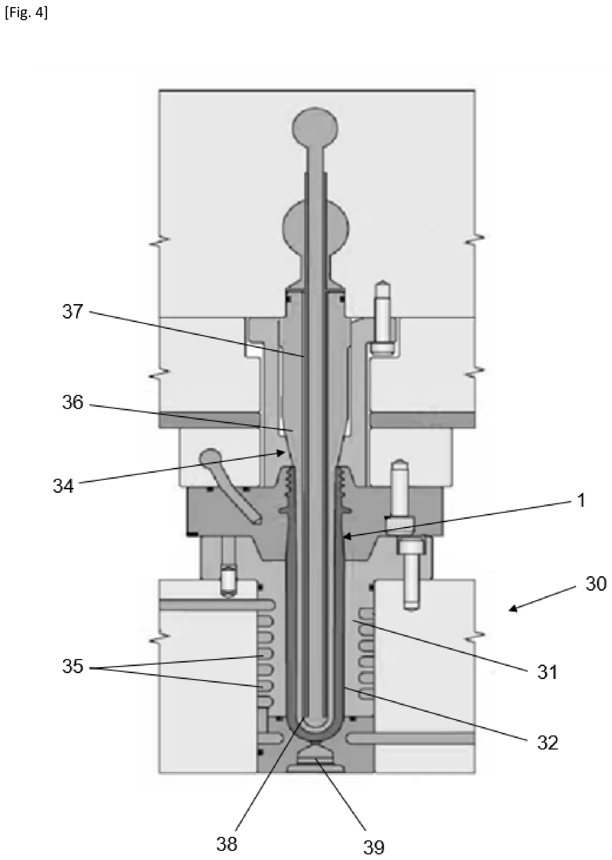

Par ailleurs, on a partiellement représenté sur la figure 4 un moule 30 pour le formage d'une préforme 1 telle que décrite précédemment.

Plus précisément, le moule 30 illustré est avantageusement conçu pour permettre la fabrication de la préforme 1 illustrée sur la figure 1, par simple injection d'une matière plastique (typiquement du PET et/ou du rPET). Un tel moule 30 comprend, d'une part, un corps 31 de moule ayant une paroi 32 latérale à l'empreinte de la face externe de la préforme 1 au niveau du corps 3 et un fond 33 de moule à l'empreinte de la face externe de la préforme 1 au niveau du fond 7, et, d'autre part, un noyau 34 à l'empreinte de la face interne de la préforme 1.

Le corps 31 de moule et le fond 33 de moule sont fixes, tandis que le noyau 34 est mobile en translation par rapport à ceux-ci pour permettre l'évacuation et le dévêtissement de la préforme 1 une fois formée.

Comme on le voit sur la figure 4, la paroi 32 latérale et le fond 33 de moule sont pourvus, sur leur périphérie, de rainures 35 formant, avec une coque externe (non représentée) des conduits de circulation d'un fluide frigorigène (tel que de l'eau) destiné à assurer le refroidissement, par sa face externe, de la préforme 1 immédiatement après son formage.

Comme on le voit également sur la figure 4, le noyau 34 est pourvu d'une enveloppe 36 externe creuse à l'empreinte de la face interne de la préforme 1, et d'un injecteur 37 central, également creux, pourvu à une extrémité inférieure d'échancrures 38. Un fluide frigorigène (tel que de l'eau), introduit dans l'injecteur 37, passe par les échancrures 38 et circule entre l'injecteur 37 et l'enveloppe 36 pour réguler la température de celle-ci à une valeur modérée et ainsi assurer le refroidissement, par sa face interne, de la préforme 1 immédiatement après son formage.

La matière (par ex. du PET et/ou du rPET) est introduite sous forme fondue, au moyen d'un dispositif d'injection (non représenté) par un trou 39 percé au centre du fond 33 de moule.

On observera que, en variante, on peut imaginer de former la préforme 1 par d'autres techniques que l'injection simple, notamment l'injection-compression.

Enfin, il est bien évident que les exemples que l'on vient de donner ne sont que des illustrations particulières en aucun cas limitatives quant aux domaines d'application de l'invention.

## Revendications

1. Préforme (1) pour la fabrication de récipients par étirage-soufflage, en matière plastique, comprenant au moins un corps (2) symétrique de révolution autour d'un axe (X) central vertical, ledit corps (2) comportant une paroi extérieure (2a) et une paroi intérieure (2b), la distance radiale entre la paroi extérieure (2a) et la paroi intérieure (2b) définissant une épaisseur de paroi, un col (3) ouvert qui s'étend dans le prolongement du corps (2) à partir d'une extrémité supérieure de celui-ci, ledit col (3) étant séparé du corps (2) par une collerette annulaire (4), et un fond (5) qui ferme le corps (2) à partir d'une extrémité inférieure (6) de ce dernier, ledit fond (5) étant symétrique de révolution autour de l'axe (X) central, **caractérisée en ce que** ledit corps (2) présente une forme sensiblement cylindrique dont l'épaisseur de la paroi est croissante depuis la collerette (4), l'épaisseur de la paroi du corps (2) sous la collerette étant égale à E2, en direction du fond (5) sur une hauteur dite de variation Hv qui est strictement inférieure à la hauteur H entre la collerette (4) et l'extrémité inférieure (6) du corps (2) et est strictement supérieure à 0,35H, ladite hauteur de variation Hv étant la moyenne de la hauteur de variation Hv₁ de la paroi extérieure (2a) et de la hauteur de variation Hv₂ de la paroi intérieure (2b), de sorte que ladite épaisseur E2 soit croissante sur la hauteur Hv et que l'épaisseur de la paroi du corps (2) entre la hauteur Hv et l'extrémité inférieure (6) du corps soit sensiblement constante et égale à E1, dans laquelle E1 correspond à l'épaisseur de la paroi du corps (2) à partir de la hauteur Hv₁ ou Hv₂ la plus grande.

2. Préforme (1) suivant la revendication 1 **caractérisée en ce que** la hauteur de variation Hv₁ de la paroi extérieure (2a) et la hauteur de variation Hv₂ de la paroi intérieure (2b) est comprise entre 0,7 Hv et 1,3 Hv.

3. Préforme (1) suivant l'une quelconque des revendications 1 ou 2 **caractérisée en ce que** la variation V de l'épaisseur du corps (2) sur la hauteur Hv, qui est égale à E1-E2 est comprise entre 0.25 E1 et 0.75 E1.

4. Préforme (1) suivant les revendications 1 et 3 **caractérisée en ce que** le taux de variation T de l'épaisseur du corps (2) qui est égal à la hauteur de variation Hv divisé par la variation V (T=Hv/V) est compris entre 10 et 40.

5. Préforme (1) suivant la revendication 4 **caractérisée en ce que** le taux de variation T de l'épaisseur du corps (2) est compris entre 20 et 25.

6. Préforme (1) suivant l'une quelconque des revendications 1 à 5 **caractérisée en ce que**, sur la hauteur de variation Hv, le diamètre externe moyen D1 du corps est croissant depuis la collerette (4) en direction de l'extrémité inférieure (6) du corps (2).

7. Préforme (1) suivant l'une quelconque des revendications 1 à 6 **caractérisée en ce que**, sur la hauteur Hv, le diamètre externe moyen D2 du corps (2) est constant depuis la collerette (4) en direction de l'extrémité inférieure (6) du corps (2).

8. Préforme (1) suivant l'une quelconque des revendications 1 à 5 **caractérisée en ce que**, sur la hauteur de variation Hv, le diamètre externe moyen D1 du corps (2) est constant depuis la collerette (4) en direction de l'extrémité inférieure (6) du corps (2).

9. Préforme (1) suivant l'une quelconque des revendications 1 à 6 **caractérisée en ce que**, sur la hauteur Hv, le diamètre externe moyen D2 du corps (2) est décroissant depuis la collerette (4) en direction de l'extrémité inférieure (6) du corps (2).

10. Préforme (1) suivant l'une quelconque des revendications 1 à 5 **caractérisée en ce que**, sur la hauteur Hv, le diamètre externe moyen D1 du corps (2) est décroissant depuis la collerette (4) en direction de l'extrémité inférieure (6) du corps (2) et le diamètre externe moyen D2 du corps (2) est décroissant depuis la collerette (4) en direction de l'extrémité inférieure (6) du corps (2), ledit diamètre externe moyen D2 décroissant plus rapidement que le diamètre interne moyen D1.

11. Préforme (1) suivant l'une quelconque des revendications 1 à 10 **caractérisée en ce que** l'épaisseur E1 de la paroi du corps (2) entre la hauteur Hv et l'extrémité inférieure (6) du corps (2) varie de plus ou moins 20%.

12. Préforme (1) suivant l'une quelconque des revendications 1 à 11 **caractérisée en ce que** le fond (5) présente une forme sensiblement hémisphérique.

13. Préforme (1) suivant l'une quelconque des revendications 1 à 12 **caractérisée en ce que** le fond (5) présente une épaisseur de paroi inférieure ou égale à l'épaisseur E1 du corps (2) de la préforme (1).

14. Procédé de fabrication d'un récipient par soufflage ou par étirage-soufflage comprenant au moins les étapes suivantes de :
- Fourniture d'une préforme (1) selon l'une quelconque des revendications 1 à 13 ;
- Chauffe du corps (2) de la préforme (1) par exposition à un rayonnement infrarouge monochromatique ou quasi-monochromatique d'intensité prédéterminée ; et
- Formage du récipient par injection d'un fluide sous pression dans la préforme (1) ainsi préalablement chauffée.

15. Procédé selon la revendication 14 **caractérisé en ce qu'**il comprend, entre l'étape de chauffe et l'étape de formage, une étape d'introduction de la préforme (1) dans un moule (14) à l'empreinte du récipient.

16. Moule (14) pour le formage d'une préforme (1) selon l'une quelconque des revendications 1 à 13 comprenant au moins un corps (31) de moule ayant une paroi latérale à l'empreinte d'une face externe du corps (2) de la préforme (1) et un fond de moule 33 à l'empreinte d'une face externe du fond (5) de la préforme (1) et un noyau (34) à l'empreinte d'une face interne de la préforme (1).
